(19) Europäisches Patentamt

European Patent Office

Office européen des brevets

(11) **EP 1 001 522 A1**

(12) **DEMANDE DE BREVET EUROPEEN**

(43) Date de publication:
**17.05.2000 Bulletin 2000/20**

(51) Int. Cl.$^7$: **H02P 9/04**, H02P 9/42,
H02P 9/48, G05F 1/67

(21) Numéro de dépôt: **99811047.2**

(22) Date de dépôt: **15.11.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **13.11.1998 FR 9814375**

(71) Demandeur:
**Ecopower Energy Solutions AG**
**2500 Biel (CH)**

(72) Inventeurs:
• **Tissot, Norbert**
  **2000 Neuchatel (CH)**
• **Schulthess, Thomas**
  **2500 Bienne (CH)**

(74) Mandataire: **Nithardt, Roland**
**Cabinet Roland Nithardt,**
**Conseils en Propriété Industrielle S.A.,**
**Y-Parc Scientifique et Technologique,**
**Chemin de la Sallaz**
**1400 Yverdon-les-Bains (CH)**

(54) **Procédé et dispositif de régulation d'une génératrice de courant continu sans balais**

(57) Le dispositif de régulation est associé à une génératrice (11) du type à courant continu sans balais, coopérant avec une turbine (12). Il comporte également un convertisseur de fréquence (20) agencé pour transformer un courant alternatif à tension et à fréquence variables fourni par la génératrice (11) en un courant continu ayant une tension variable. Ce courant est ensuite transformé de façon à pouvoir être introduit dans le réseau électrique (24). La vitesse de rotation de la turbine est réglée de façon à produire une puissance électrique désirée, par exemple la puissance électrique maximale dans des conditions d'utilisation données. Le réglage de la vitesse de rotation est effectué en modifiant le courant introduit dans le réseau.

FIG. 4

EP 1 001 522 A1

## Description

La présente invention concerne un procédé de régulation de la puissance fournie par une génératrice de courant électrique du type à courant continu sans balais, comportant au moins une turbine rotative, la génératrice alimentant un réseau de courant électrique alternatif ayant une tension et une fréquence fixes données.

Elle concerne également un dispositif de régulation de la puissance fournie par une génératrice de courant électrique du type à courant continu sans balais, comportant au moins une turbine rotative, la génératrice alimentant un réseau de courant électrique alternatif ayant une tension et une fréquence fixes données.

Il existe actuellement de nombreuses génératrices de courant électrique accouplées à une turbine rotative et destinées à produire de l'énergie électrique à partir d'un flux d'eau générant la rotation de la turbine.

Dans ces génératrices, l'énergie électrique obtenue alimente un réseau électrique ayant une tension et une fréquence fixes définies.

La tension et la fréquence de l'énergie électrique produite par une génératrice entraînée par une turbine dépendent en particulier de la vitesse de rotation de cette turbine. Afin d'obtenir une tension et une fréquence fixes, la vitesse de rotation de la turbine doit également être fixe.

Dans le cas d'une turbine hydraulique, la vitesse de rotation dépend de la pression et du débit de l'eau qui la traverse. Ces deux paramètres doivent donc être pris en compte lors de la conception et de la fabrication d'une turbine qui doit être installée dans un site donné. Ceci implique que pour chaque site, une turbine particulière doit être implantée. Il n'est donc pas possible de réaliser de grandes séries de turbines et de génératrices identiques pour de nombreux sites différents.

D'autre part, les conditions de débit et de pression pour un site donné varient généralement, par exemple en fonction de la saison. Des moyens doivent être mis en oeuvre pour adapter, dans la mesure du possible, la turbine à ces variations.

Les turbines connues comportent généralement des moyens de régulation réalisés sous la forme d'ailettes pivotantes et de vannes qui permettent de contrôler et d'orienter la pression et le débit d'eau qui entre dans la turbine.

En outre, les ailettes pivotantes impliquent une construction mécanique complexe ainsi qu'une régulation de leur position. Le coût de fabrication et d'utilisation de telles installations est donc élevé.

Le brevet américain US-A-5,029,288 décrit une génératrice ne comportant pas d'ailettes pour réguler le flux. Cette génératrice est du type asynchrone. Elle comporte d'une part, un détecteur de vitesse de rotation d'une hélice introduite dans un flux d'eau et, d'autre part, un détecteur du courant produit par la génératrice.

Ce courant est comparé à un courant de consigne correspondant à une puissance maximale produite par la génératrice dans des conditions de flux d'eau données. En fonction du résultat de la comparaison des courants, on agit sur le détecteur de vitesse pour modifier la vitesse de rotation de l'hélice. La construction de cette génératrice implique qu'il est nécessaire de mesurer la vitesse de rotation de l'hélice et qu'il existe des moyens mécaniques permettant de modifier cette vitesse.

En outre, le procédé utilisé pour la recherche de la puissance maximale ne peut être employé qu'avec des générateurs du type asynchrone. Il ne fonctionne absolument pas avec des générateurs à courant continu sans balais.

La présente invention se propose de pallier ces inconvénients en réalisant un procédé de régulation utilisable avec un générateur à courant continu sans balais, qui permet d'utiliser une même turbine dans des conditions différentes, en récupérant au maximum l'énergie disponible. Elle se propose également de réaliser un dispositif de régulation comportant un générateur à courant continu sans balais, qui permet d'utiliser une turbine de fabrication simple, sans moyens mécaniques agissant sur la vitesse de rotation de la turbine, tout en récupérant au mieux l'énergie disponible.

Ces buts sont atteints par un procédé tel que défini en préambule et caractérisé en ce que l'on modifie la puissance électrique fournie par la génératrice en modifiant la vitesse de rotation de la turbine, et en ce que la modification de la vitesse de rotation de la turbine est effectuée en modifiant et en contrôlant le courant introduit dans le réseau.

Selon un mode de réalisation préféré, l'on détermine la puissance électrique fournie par la génératrice en fonction de la vitesse de rotation de la turbine, et l'on régule la vitesse de rotation de la turbine de façon à obtenir une puissance électrique souhaitée.

De façon avantageuse, l'on introduit dans le réseau un courant tel que la vitesse de rotation de la turbine correspond à une puissance électrique souhaitée.

La puissance électrique souhaitée peut être la puissance maximale disponible.

Selon une forme de réalisation avantageuse, on détermine la puissance maximale en déterminant la puissance instantanée pour différentes vitesses de rotation de la turbine et en comparant les différentes puissances instantanées déterminées.

On détermine avantageusement la puissance souhaitée en déterminant la puissance électrique correspondant à une vitesse de rotation initiale déterminée, en déterminant la puissance électrique correspondant à une vitesse de rotation différente, et en modifiant le courant fourni au réseau en fonction du signe de la différence de puissance électrique entre les deux vitesses de rotation.

On modifie de préférence la vitesse de rotation de la turbine à des intervalles de temps déterminés, et on mesure la puissance électrique fournie après chaque modification de la vitesse de rotation de la turbine.

Si une augmentation de la vitesse de rotation de la turbine correspond à une augmentation de la puissance électrique produite par la génératrice, on augmente la vitesse de rotation de la turbine, et si une augmentation de la vitesse de rotation de la turbine correspond à une diminution de la puissance électrique produite par la génératrice, on diminue la vitesse de rotation de la turbine.

Selon un mode de réalisation préféré, on transforme le courant électrique fourni par la génératrice en un courant ayant une tension et une fréquence proches de la tension et de la fréquence du réseau dans lequel ce courant est introduit.

Dans ce procédé, on transforme de préférence le courant électrique fourni par la génératrice en un courant ayant une tension et une fréquence proches de la tension et de la fréquence du réseau en redressant le courant sortant du générateur de façon à obtenir une tension continue, en stabilisant cette tension à une valeur prédéfinie sensiblement constante, et en transformant ce courant à tension continue en un courant alternatif ayant une fréquence et une tension sensiblement égales à la fréquence et à la tension du courant du réseau.

On mesure avantageusement la phase du courant du réseau, et on transforme le courant produit par la génératrice en un courant ayant un déphasage sensiblement nul par rapport au courant du réseau.

Ces buts sont également atteints par un dispositif tel que défini en préambule et caractérisé en ce qu'il comporte un dispositif de calcul agencé pour déterminer la puissance électrique fournie par la génératrice et des moyens pour modifier la puissance introduite dans le réseau.

Ce dispositif comporte avantageusement au moins une mémoire pour mémoriser la puissance électrique fournie par la génératrice en fonction de différentes valeurs du courant introduit dans le réseau, et des moyens pour fournir au réseau un courant correspondant à la puissance souhaitée fournie par la génératrice.

Selon une forme de réalisation avantageuse, il comporte un circuit de transformation du courant électrique produit par la génératrice en un courant alternatif ayant une tension et une fréquence correspondant à la tension et à la fréquence du courant du réseau.

Le circuit de transformation comporte de préférence un redresseur, un rehausseur de tension et un onduleur.

Selon un mode de réalisation préféré, le réseau est utilisé pour régler l'onduleur.

La présente invention et ses avantages seront mieux compris en référence à un mode de réalisation particulier de l'invention et aux dessins annexés dans lesquels :

- les figures 1 à 3 représentent diverses variantes de réalisations de génératrices utilisables avec un dispositif selon la présente invention,

- la figure 4 est une vue schématique d'un dispositif de régulation selon la présente invention,

- la figure 5 illustre un détail du dispositif de régulation de la figure 4,

- la figure 6 représente différentes courbes de la puissance délivrée par les génératrices des figures 1 à 4 en fonction de la vitesse de rotation de la turbine, et

- la figure 7 est un schéma de principe du procédé de régulation selon la présente invention.

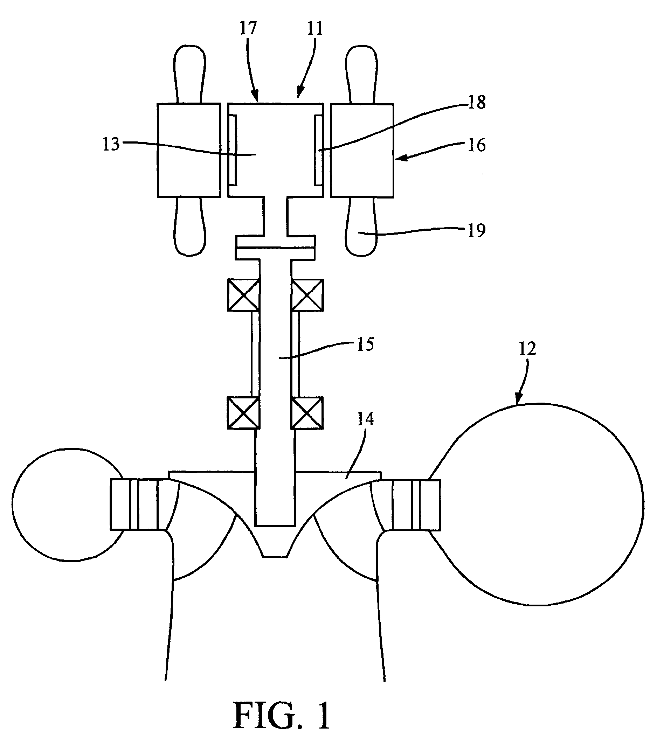

En référence aux figures 1 à 4, le dispositif 10 de régulation d'une génératrice de courant électrique, selon la présente invention est associé à une génératrice 11 réalisée sous la forme d'une génératrice à courant continu sans balais. Celle-ci est reliée à un dispositif de transformation de l'énergie cinétique ou potentielle en énergie mécanique. Ce dispositif, communément appelé turbine 12, utilise un fluide quelconque tel que de l'eau, de la vapeur d'eau ou de l'air comme moyen de propulsion. La génératrice 11 et la turbine 12 ont chacune une partie tournante, respectivement 13 et 14, ces parties pouvant être couplées entre elles au moyen d'un arbre de couplage 15. La partie tournante 13 de la génératrice 11 peut être intégrée dans la partie tournante 14 de la turbine 12 de sorte que les deux parties tournantes constituent une pièce unique.

Cette génératrice 11 comporte une partie statorique 16 et une partie rotorique 17. Dans les exemples représentés, la partie statorique 16 est périphérique et la partie rotorique 17 est centrale et couplée ou intégrée à la partie tournante 13 de la génératrice 11. La partie rotorique 17 comporte par exemple une série d'aimants permanents 18, montés à sa périphérie. Toutefois d'autres dispositifs d'induction peuvent être utilisés en remplacement des aimants permanents. La partie statorique 16 comporte au moins une bobine 19, et est connectée à un convertisseur de fréquence 20 décrit en détail ci-dessous.

La forme de réalisation de la figure 1 peut être adaptée à une turbine 12 constituée par une éolienne.

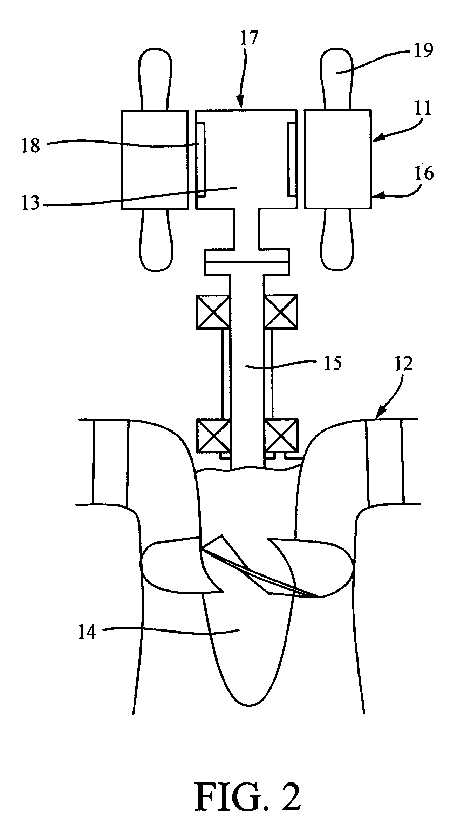

La figure 2 représente une variante de réalisation dans laquelle la turbine 12 est spécifiquement une turbine à eau dont la partie tournante 14 est montée dans un canal d'amenée.

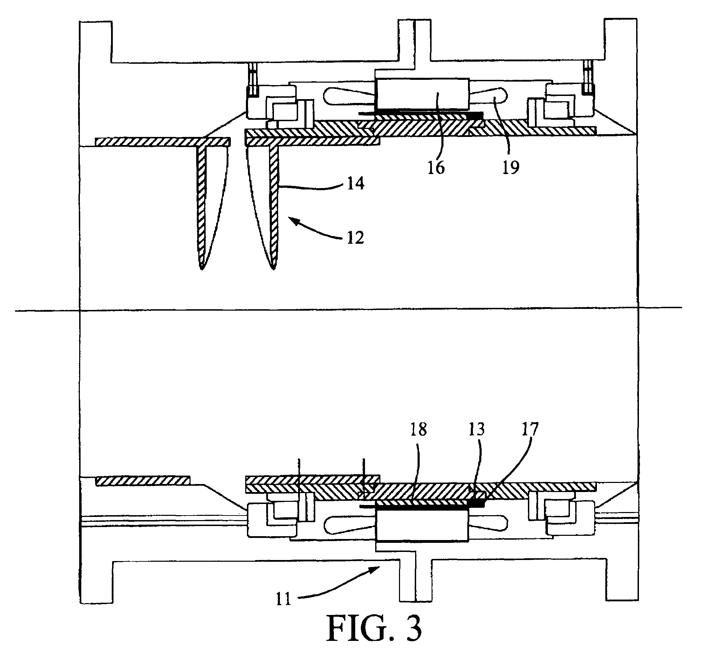

La figure 3 représente une variante de réalisation dans laquelle la turbine 12 est logée à l'intérieur d'un corps creux monté dans le prolongement d'un canal d'amenée d'un fluide de propulsion. La génératrice 11 est montée à la périphérie dudit corps creux et l'arbre de couplage 15 est lui-même de configuration creuse pour permettre l'accouplement mécanique entre la partie tournante 14 de la turbine 12 et la partie tournante 13 de la génératrice.

Le signal électrique sortant de la génératrice 11 selon les figures 1 à 3 est un courant alternatif à tension et fréquence variables.

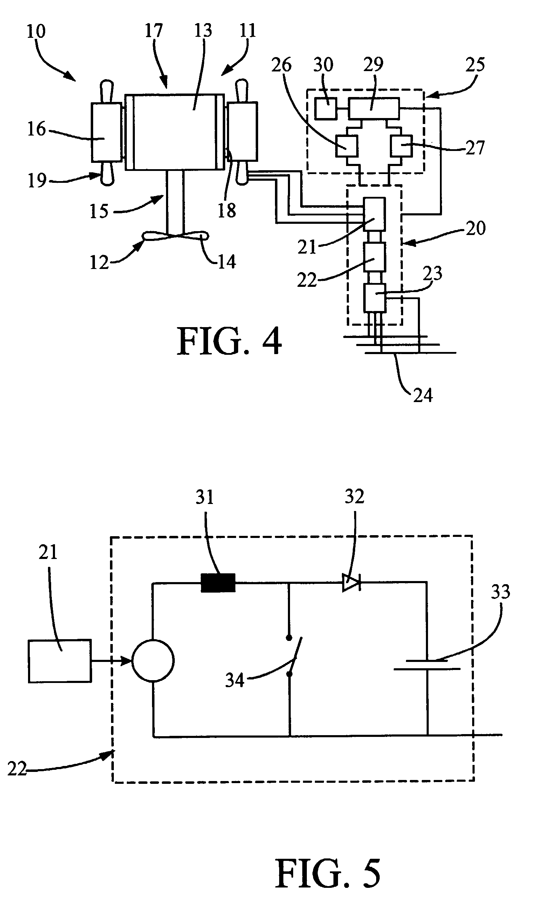

En se référant plus particulièrement à la figure 4, le convertisseur de fréquence 20 comporte un redresseur 21 qui transforme le courant alternatif à tension et fréquence variables fourni par la génératrice 11 en un courant continu ayant une tension variable. Ce convertisseur 20 comporte un rehausseur de tension 22 qui transforme la tension variable sortant du redresseur 21 en une tension fixe. Ce rehausseur de tension est décrit plus en détail ci-dessous. Le convertisseur 20 comporte en outre un onduleur 23 qui transforme le courant continu sortant du rehausseur de tension 22 en un courant alternatif ayant une tension adaptée et une fréquence synchronisée au réseau 24 dans lequel le courant est introduit.

Afin de réaliser celle synchronisation, on mesure le déphasage entre le réseau et l'onduleur et on transmet un signal à l'onduleur, correspondant à ce déphasage agissant sur l'onduleur pour compenser le déphasage. Le convertisseur de fréquence 20 est également associé à des moyens de contrôle 25 tels qu'un dispositif 26 pour mesurer la tension du réseau et un dispositif 27 pour mesurer l'intensité du courant introduit dans le réseau. La vitesse de rotation de la génératrice et la puissance électrique introduite mise dans le réseau sont déterminées dans un dispositif de calcul 29. Les résultats obtenus sont stockés dans une mémoire 30.

La puissance mécanique fournie par la turbine est fonction des conditions d'écoulement, de débit et de pression du fluide propulseur. Cette puissance mécanique peut être exprimée comme le produit du couple et de la vitesse de rotation de la turbine.

La figure 5 illustre de façon détaillée le fonctionnement du rehausseur de tension 22. Ce rehausseur de tension comporte essentiellement une bobine d'induction 31, une diode 32, un condensateur 33 et un transistor bipolaire à grille isolée 34 connu sous l'abréviation IGBT (Insulated Gate Bipolar Transistor). Ce rehausseur reçoit le courant continu provenant du redresseur 21.

Lorsque le transistor bipolaire à grille isolée 34 est fermé, un courant charge la bobine d'induction 31. Une tension apparaît aux bornes de cette bobine.

Celle tension peut être exprimée sous la forme

$$U = L\frac{di}{dt}$$

où L est l'inductance de la bobine.

Lorsque le transistor bipolaire à grille isolée 34 est ouvert, la bobine se décharge selon l'équation ci-dessus. Comme la dérivée est négative, une tension s'ajoute à la tension de la source. La diode empêche un retour du courant entre la partie du circuit ayant une tension fixe et celle ayant une tension variable.

Le temps d'ouverture et de fermeture du transistor bipolaire à grille isolée 34 permet de régler la hausse de tension.

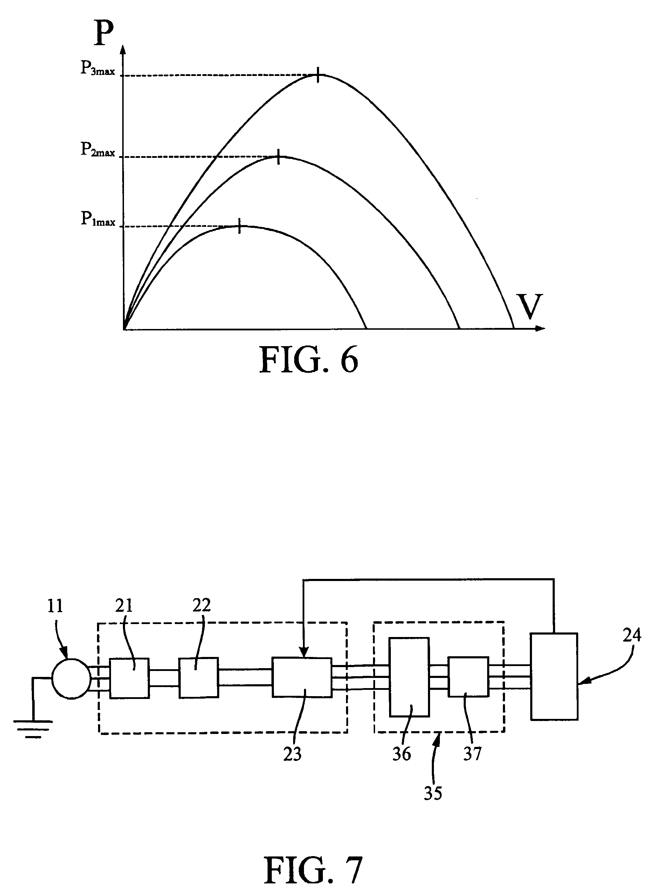

La figure 6 représente différentes courbes illustrant la puissance électrique fournie par la génératrice 11 en fonction de la vitesse de rotation de la turbine 12.

A partir de ces courbes, on peut déduire que, pour des conditions d'écoulement de fluide données, c'est-à-dire dans le cas où le fluide est dans l'eau, pour un débit et une pression déterminés, la puissance électrique atteint un maximum pour une vitesse de rotation donnée. Toute fluctuation des conditions hydrauliques entraînera une variation de la vitesse de rotation de la turbine. Une variation de cette vitesse autour de ce point entraîne une diminution de la puissance fournie à la génératrice.

La puissance mécanique de la turbine est fonction de sa vitesse de rotation et de son couple. La puissance électrique générée par la génératrice est fonction de la tension et du courant.

Le procédé selon la présente invention utilise une relation entre la puissance mécanique et la puissance électrique de cette génératrice.

La vitesse de rotation de la turbine est réglée en fonction de la puissance à obtenir. Généralement, la puissance souhaitée est la puissance maximale que peut fournir la génératrice dans les conditions réelles d'utilisation.

Toutefois, il est possible d'imposer une puissance inférieure à la puissance maximale dans des applications particulières.

La vitesse de rotation de la turbine est réglée par le courant que fournit la génératrice au réseau. Si cette vitesse de rotation doit être réduite, le courant introduit dans le réseau est augmenté. Ceci est illustré en particulier par la figure 7. En référence à cette figure, la génératrice 11 fournit un courant alternatif dont l'amplitude et la fréquence sont variables. Ce courant est introduit dans le redresseur 21 qui fournit une tension à courant continu variable en amplitude. Ce courant est introduit dans le rehausseur de tension 22 commandé de manière à délivrer un courant continu d'amplitude fixe prédéterminée. Ce courant continu est transformé par l'onduleur 23 en un courant alternatif triphasé à la fréquence du réseau 24. Le courant introduit dans l'onduleur est augmenté jusqu'à la valeur voulue par une augmentation du déphasage entre la tension de l'onduleur 23 et la tension du réseau. Parallèlement, la tension de l'onduleur est augmentée afin de conserver un facteur de puissance voisin de 1. Le réglage de la tension du convertisseur de fréquence 20 se fait par la modification d'un signal de modulation de largeur d'amplitude, connu sous l'abréviation PWM (Puls Width Modulation).

L'augmentation de courant produit, dans la partie de courant continu du redresseur, une chute de tension qui est immédiatement compensée par la régulation du rehausseur de tension 22. La tension à la sortie du rehausseur de tension conserve ainsi une tension continue, par exemple de +/-380 V, malgré les variations de courant. La génératrice 11, qui fournit ce courant par l'intermédiaire du redresseur 21, est par conséquent plus chargée. La turbine est ainsi freinée jusqu'à la vitesse désirée.

Si la vitesse de rotation de la turbine doit être augmentée, le courant fourni au réseau est réduit de la même manière. Ceci diminue la charge sur la génératrice et la turbine accélère jusqu'à la vitesse souhaitée.

A l'enclenchement de la génératrice, on part d'une vitesse de rotation initiale et on détermine une valeur de la puissance qui est stockée dans la mémoire 30. Après un certain temps, par exemple 5 minutes, on diminue la charge sur la génératrice, ce qui augmente la vitesse de rotation. On détermine à nouveau la puissance obtenue et on la compare à celle stockée dans la mémoire 30. Si la puissance calculée est supérieure à celle stockée en mémoire, on continue à augmenter la vitesse de rotation en diminuant la charge sur la génératrice à intervalles de temps réguliers jusqu'à ce qu'une diminution de puissance soit notée. A partir de cette diminution de puissance, la vitesse de rotation est diminuée en augmentant la charge jusqu'à ce que la puissance calculée soit inférieure à celle stockée dans la mémoire 30. A ce moment, on augmente la vitesse de rotation en diminuant la charge de la génératrice jusqu'à ce qu'une nouvelle diminution de la puissance soit notée. On obtient ainsi une légère oscillation de la vitesse de rotation autour de la vitesse correspondant à la puissance maximale.

Il est également possible d'optimiser le calcul de puissance afin d'arriver plus rapidement au point de puissance maximale. Ceci peut être obtenu en employant un régulateur d'ordre supérieur et/ou en faisant varier la période d'échantillonnage.

Dans certaines applications, il n'est pas souhaitable d'utiliser la puissance maximale, mais plutôt une puissance fixe donnée. Ceci peut être réalisé comme précédemment.

Le type de turbine utilisée peut être quelconque pour autant qu'il permette d'atteindre les buts mentionnés ci-dessus. Il peut s'agir d'une turbine hydraulique, d'une turbine à vapeur, d'une turbine à gaz, d'une éolienne ou de tout autre dispositif permettant de créer de l'énergie mécanique par le passage d'un fluide. De même, il est possible d'adapter l'onduleur pour qu'il puisse fonctionner sur un réseau de tension et de fréquence quelconques.

Toutefois, le générateur est toujours un générateur à courant continu sans balais.

Ce dispositif peut être utilisé comme microcentrale électrique, par exemple dans une conduite d'eau domestique, comme génératrice de courant sur un bateau, dans une conduite de vapeur d'eau, etc. Toutes sortes d'applications différentes peuvent également être envisagées.

**Revendications**

1. Procédé de régulation de la puissance fournie par une génératrice de courant électrique du type à courant continu sans balais, comportant au moins une turbine rotative, la génératrice alimentant un réseau de courant électrique alternatif ayant une tension et une fréquence fixes données, caractérisé en ce que l'on ajuste la vitesse de rotation de la turbine (12) pour produire par l'intermédiaire de la génératrice (11) une puissance électrique prédéterminée pour alimenter ledit réseau et en ce que l'on ajuste la vitesse de rotation de la turbine (12) en mesurant de façon régulière le courant introduit dans le réseau (24) et en modifiant ce courant .

2. Procédé selon la revendication 1, caractérisé en ce que l'on détermine la puissance électrique fournie par la génératrice (11) en fonction de la vitesse de rotation de la turbine (12), et en ce que l'on régule la vitesse de rotation de la turbine (12) de façon à obtenir une puissance électrique souhaitée.

3. Procédé selon la revendication 2, caractérisé en ce que l'on introduit dans le réseau (24), un courant tel que la vitesse de rotation de la turbine (12) correspond à une puissance électrique souhaitée.

4. Procédé selon la revendication 2 ou 3, caractérisé en ce que la puissance électrique souhaitée est la puissance maximale disponible.

5. Procédé selon la revendication 4, caractérisé en ce que l'on détermine la puissance maximale en déterminant la puissance instantanée pour différentes vitesses de rotation de la turbine (12) et en comparant les différentes puissances instantanées déterminées.

6. Procédé selon la revendication 2, caractérisé en ce que l'on détermine la puissance souhaitée en déterminant la puissance électrique correspondant à une vitesse de rotation initiale déterminée, en déterminant la puissance électrique correspondant à une vitesse de rotation différente, et en modifiant le courant fourni au réseau (24) en fonction du signe de la différence de puissance électrique entre les deux vitesses de rotation.

7. Procédé selon la revendication 6, caractérisé en ce que l'on modifie la vitesse de rotation de la turbine (12) à des intervalles de temps déterminés, et en ce que l'on mesure la puissance électrique fournie après chaque modification de la vitesse de rotation de la turbine.

8. Procédé selon la revendication 7, caractérisé en ce que, si une augmentation de la vitesse de rotation de la turbine (12) correspond à une augmentation de la puissance électrique produite par la génératrice (11), on augmente la vitesse de rotation de la turbine et, si une augmentation de la vitesse de rotation de la turbine (12) correspond à une diminution de la puissance électrique produite par la génératrice (11), on diminue la vitesse de rotation de la turbine.

9. Procédé selon l'une quelconque des revendications précédentes, caractérisé en ce que l'on transforme le courant électrique fourni par la génératrice (11) en un courant ayant une tension et une fréquence proches de la tension et de la fréquence du réseau (24) dans lequel ce courant est introduit.

10. Procédé selon la revendication 9, caractérisé en ce que l'on transforme le courant électrique fourni par la génératrice (11) en un courant ayant une tension et une fréquence proches de la tension et de la fréquence du réseau (24) en redressant le courant sortant du générateur de façon à obtenir une tension continue, en stabilisant cette tension à une valeur prédéfinie sensiblement constante, et en transformant ce courant à tension continue en un courant alternatif ayant une fréquence et une tension sensiblement égales à la fréquence et à la tension du courant du réseau.

11. Procédé selon la revendication 10, caractérisé en ce que l'on mesure la phase du courant du réseau (24) et en ce que l'on transforme le courant produit par la génératrice (11) en un courant ayant un déphasage sensiblement nul par rapport au courant du réseau (24).

12. Dispositif de régulation de la puissance fournie par une génératrice de courant électrique du type à courant continu sans balais, comportant au moins une turbine rotative, la génératrice alimentant un réseau de courant électrique alternatif ayant une tension et une fréquence fixes données, caractérisé en ce qu'il comporte un dispositif de calcul (29) agencé pour déterminer la puissance électrique fournie par la génératrice et des moyens pour modifier le courant introduit dans le réseau (24).

13. Dispositif selon la revendication 12, caractérisé en ce qu'il comporte au moins une mémoire (30) pour mémoriser la puissance électrique fournie par la génératrice (11) en fonction de différentes valeurs du courant introduit dans le réseau (24) et des moyens pour fournir au réseau un courant correspondant à la puissance souhaitée fournie par la génératrice (11).

14. Dispositif selon la revendication 12, caractérisé en ce qu'il comporte un circuit de transformation du courant électrique produit par la génératrice en un courant alternatif ayant une tension et une fréquence correspondant à la tension et à la fréquence du courant du réseau (24).

15. Dispositif selon la revendication 14, caractérisé en ce que le circuit de transformation comporte un redresseur (21), un rehausseur de tension (22) et un onduleur (23).

16. Dispositif selon la revendication 15, caractérisé en ce qu'un signal provenant du réseau (24) est utilisé pour régler l'onduleur (23).

FIG. 1

FIG. 2

FIG. 3

FIG. 4

FIG. 5

FIG. 6

FIG. 7

**EP 1 001 522 A1**

Office européen
des brevets

**RAPPORT DE RECHERCHE EUROPEENNE**

Numéro de la demande

EP 99 81 1047

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 029 288 A (KUBOTA YUZURU ET AL) 2 juillet 1991 (1991-07-02) * colonne 2, ligne 28 - ligne 40 * --- | 1-10,12, 14,15 | H02P9/04 H02P9/42 H02P9/48 G05F1/67 |
| A | EP 0 739 087 A (GEN ELECTRIC) 23 octobre 1996 (1996-10-23) * figure 2 * --- | 11,16 | |
| A | US 4 367 890 A (SPIRK FRANZ) 11 janvier 1983 (1983-01-11) --- | | |
| A | FR 2 406 093 A (CREUSOT LOIRE) 11 mai 1979 (1979-05-11) ----- | | |

|  |  |
|---|---|
| | DOMAINES TECHNIQUES RECHERCHES (Int.Cl.7) |
| | H02P G05F |

Le présent rapport a été établi pour toutes les revendications

| Lieu de la recherche | Date d'achèvement de la recherche | Examinateur |
|---|---|---|
| LA HAYE | 9 février 2000 | Wansing, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P04C02)

12

EP 1 001 522 A1

**ANNEXE AU RAPPORT DE RECHERCHE EUROPEENNE
RELATIF A LA DEMANDE DE BREVET EUROPEEN NO.**                EP 99 81 1047

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-02-2000

| Document brevet cité au rapport de recherche | Date de publication | Membre(s) de la famille de brevet(s) | | Date de publication |
|---|---|---|---|---|
| US 5029288 A | 02-07-1991 | JP | 1270798 A | 30-10-1989 |
| | | JP | 2009550 C | 02-02-1996 |
| | | JP | 7028559 B | 29-03-1995 |
| | | CA | 1303672 A | 16-06-1992 |
| EP 0739087 A | 23-10-1996 | US | 5742515 A | 21-04-1998 |
| | | WO | 9812797 A | 26-03-1998 |
| | | BR | 9607151 A | 11-11-1997 |
| | | CA | 2174569 A | 22-10-1996 |
| | | CN | 1166867 A | 03-12-1997 |
| | | EP | 0800616 A | 15-10-1997 |
| | | FR | 2741116 A | 16-05-1997 |
| | | FR | 2755547 A | 07-05-1998 |
| | | JP | 9019193 A | 17-01-1997 |
| | | WO | 9716627 A | 09-05-1997 |
| | | CA | 2170686 A | 22-10-1996 |
| | | CA | 2174568 A | 22-10-1996 |
| | | EP | 0749190 A | 18-12-1996 |
| | | EP | 0740387 A | 30-10-1996 |
| | | JP | 9023651 A | 21-01-1997 |
| | | JP | 9023587 A | 21-01-1998 |
| | | US | 5841267 A | 24-11-1998 |
| | | US | 5952816 A | 14-09-1999 |
| | | US | 5953225 A | 14-09-1999 |
| US 4367890 A | 11-01-1983 | DE | 3005375 A | 20-08-1981 |
| | | DE | 3037147 A | 08-04-1982 |
| | | AT | 13115 T | 15-05-1985 |
| | | AU | 541084 B | 13-12-1984 |
| | | AU | 6713281 A | 20-08-1981 |
| | | BR | 8100809 A | 25-08-1981 |
| | | CA | 1142588 A | 08-03-1983 |
| | | CS | 258107 B | 15-07-1988 |
| | | EP | 0033847 A | 19-08-1981 |
| | | ES | 499276 A | 01-01-1982 |
| | | FI | 810396 A | 12-08-1981 |
| | | IN | 154101 A | 15-09-1984 |
| | | JP | 56126675 A | 03-10-1981 |
| | | NO | 810376 A,B, | 12-08-1981 |
| | | NZ | 196210 A | 31-05-1985 |
| | | YU | 34981 A | 31-12-1983 |
| | | ZA | 8100871 A | 31-03-1982 |
| | | JP | 1456957 C | 09-09-1988 |
| | | JP | 57088852 A | 02-06-1982 |
| | | JP | 63004411 B | 28-01-1988 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 99 81 1047

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

09-02-2000

| Document brevet cité au rapport de recherche | Date de publication | Membre(s) de la famille de brevet(s) | Date de publication |
|---|---|---|---|
| FR 2406093        A | 11-05-1979 | AUCUN | |

EPO FORM P0460

Pour tout renseignement concernant cette annexe : voir Journal Officiel de l'Office européen des brevets, No.12/82